(19) Europäisches Patentamt
European Patent Office
Office européen des brevets

(11) EP 3 150 376 A1

(12) EUROPEAN PATENT APPLICATION
published in accordance with Art. 153(4) EPC

(43) Date of publication:
05.04.2017 Bulletin 2017/14

(51) Int Cl.:
B32B 27/30 (2006.01)    B32B 27/36 (2006.01)
B65D 65/40 (2006.01)    C08L 33/00 (2006.01)
C08L 67/00 (2006.01)

(21) Application number: 15800600.7

(22) Date of filing: 20.05.2015

(86) International application number:
PCT/JP2015/064464

(87) International publication number:
WO 2015/182451 (03.12.2015 Gazette 2015/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 27.05.2014 JP 2014109348

(71) Applicants:
• Gunze Limited
Ayabe-shi, Kyoto 623-8511 (JP)
• Showa Denko K.K.
Tokyo 105-8518 (JP)

(72) Inventors:
• NAKAHARA Ayumu
Moriyama-shi
Shiga 524-8501 (JP)
• NOZAKI Takanori
Moriyama-shi
Shiga 524-8501 (JP)
• YASUI Yoshikatsu
Tokyo 105-8518 (JP)
• DOI Mitsuru
Tokyo 105-8518 (JP)

(74) Representative: Adam, Holger
Kraus & Weisert
Patentanwälte PartGmbB
Thomas-Wimmer-Ring 15
80539 München (DE)

(54) HEAT-SHRINKABLE MULTILAYER FILM, MANUFACTURING HEAT-SHRINKABLE MULTILAYER FILM, AND HEAT-SHRINKABLE LABEL

(57) The present invention provides a heat-shrinkable multilayer film that has excellent wear resistance and that suffers less from static electricity generation and surface stickiness. Also provided are a method for manufacturing the heat-shrinkable multilayer film and a heat-shrinkable label formed using the heat-shrinkable multilayer film. The present invention is directed to a heat-shrinkable multilayer film including, in order: a wear-resistant layer (A) containing a polyester resin (a), a (meth)acrylic resin, a hydrocarbon wax, and an antistatic agent; a front layer (B) containing a polyester resin (b); an intermediate layer (C) containing a polystyrene resin; and a back layer (D) containing a polyester resin (d), the wear-resistant layer (A) containing the hydrocarbon wax in an amount of 1 to 60 parts by weight and the antistatic agent in an amount of 0.1 to 10.0 parts by weight, per 100 parts by weight of the total of the polyester resin (a) and the (meth)acrylic resin.

EP 3 150 376 A1

**Description**

TECHNICAL FIELD

The present invention relates to a heat-shrinkable multilayer film that has excellent wear resistance and that suffers less from static electricity generation and surface stickiness. The present invention also relates to a method for manufacturing the heat-shrinkable multilayer film and a heat-shrinkable label formed using the heat-shrinkable multilayer film.

BACKGROUND ART

Nowadays, a wide variety of soft drinks such as green tea are sold in the form of PET bottled drinks, for example, in convenience stores. Heat-shrinkable labels used in such PET bottled drinks are labels fabricated, for example, by printing on any of various film bases formed from a polystyrene resin, a polyester resin, a polyolefin resin, or the like.

Many of the heat-shrinkable labels employ polystyrene resin films since the polystyrene resin films have good shrinkage properties at low temperatures. The polystyrene resin films, however, have the disadvantage of lacking sufficient heat resistance and solvent resistance. For this reason, there have also been attempts using polyester resin films which are superior in heat resistance and solvent resistance. However, the polyester resin films are inferior in shrinkage properties at low temperatures and shrink drastically, so that they tend to wrinkle when attached to PET bottles etc.

To solve these problems, for example, Patent Literature 1 describes a heat-shrinkable multilayer film comprising an outer layer containing a polyester resin, an intermediate layer containing a polystyrene resin, and an adhesive layer containing a modified polyester elastomer, the outer layer and the intermediate layer being stacked through the adhesive layer interposed therebetween.

However, heat-shrinkable labels comprising such a film base may, during transportation of PET bottled drinks, suffer from defects such as surface scratch and friction-induced surface wear which are caused by rubbing of the bottles against each other or against the wall of a cardboard box. Attempts have been made to improve the wear resistance of the surfaces of heat-shrinkable labels (Patent Literature 2, for example); however, satisfactory improvement has not been achieved yet.

Under such circumstances, an attempt has been made to solve the problem of surface damage by coating the surface of a heat-shrinkable label.

However, the formation of a coating layer increases the surface resistivity of the surface of the label, thus causing the label to be electrostatically charged. This leads to problems such as: failure of attachment in the step of attaching the label; and label fouling caused by adsorption of dust after label attachment. To address the problem of label fouling, the addition of an antistatic agent to the coating layer has been attempted. Such addition, however, poses another problem of undesired stickiness of the label finished through shrinkage.

CITATION LIST

- Patent Literature

Patent Literature 1: JP 2008-62640 A
Patent Literature 2: JP 2002-132159 A

SUMMARY OF INVENTION

- Technical Problem

The present invention aims to provide a heat-shrinkable multilayer film that has excellent wear resistance and suffers less from static electricity generation and surface stickiness. The present invention also aims to provide a method for manufacturing the heat-shrinkable multilayer film and a heat-shrinkable label formed using the heat-shrinkable multilayer film.

- Solution to Problem

The present invention is directed to a heat-shrinkable multilayer film comprising, in order: a wear-resistant layer (A) containing a polyester resin (a), a (meth)acrylic resin, a hydrocarbon wax, and an antistatic agent; a front layer (B) containing a polyester resin (b); an intermediate layer (C) containing a polystyrene resin; and a back layer (D) containing a polyester resin (d), the wear-resistant layer (A) containing the hydrocarbon wax in an amount of 1 to 60 parts by weight and the antistatic agent in an amount of 0.1 to 10.0 parts by weight, per 100 parts by weight of the total of the polyester resin (a) and the (meth)acrylic resin.

The present invention will hereinafter be described in detail.

The present inventor has found that a heat-shrinkable multilayer film can have excellent wear resistance when it comprises a wear-resistant layer (A), a front layer (B) containing a polyester resin (b), an intermediate layer (C) containing a polystyrene resin, and a back layer (D) containing a polyester resin (d) which are multilayered in this order, provided that a polyester resin (a) and a (meth)acrylic resin are used in combination as resins constituting the wear-resistant layer (A) and that a hydrocarbon wax and an antistatic agent are contained in the wear-resistant layer (A) in predetermined proportions. The present inventor has further found that such a heat-shrinkable multilayer film suffers less from static electricity generation and surface stickiness, and has thus completed the present invention.

The heat-shrinkable multilayer film of the present invention comprises, in order, a wear-resistant layer (A), a front layer (B) containing a polyester resin (b), an intermediate layer (C) containing a polystyrene resin, and a back layer (D) containing a polyester resin (d).

The wear-resistant layer (A) contains a polyester resin (a), a (meth)acrylic resin, a hydrocarbon wax, and an antistatic agent. By virtue of containing the polyester resin (a), the (meth)acrylic resin, the hydrocarbon wax, and the antistatic agent, the wear-resistant layer (A) is excellent in wear resistance and also in adhesion to the front layer (B) and stretchability.

Examples of the polyester resin (a) constituting the wear-resistant layer (A) include a polyester resin obtained by polycondensation of a dicarboxylic acid and a diol.

The dicarboxylic acid is not particularly limited, and examples thereof include o-phthalic acid, terephthalic acid, isophthalic acid, succinic acid, adipic acid, sebacic acid, azelaic acid, octylsuccinic acid, cyclohexanedicarboxylic acid, naphthalenedicarboxylic acid, fumaric acid, maleic acid, itaconic acid, decamethylenecarboxylic acid, and anhydrides and lower alkyl esters of these acids. These may be used alone or two or more thereof may be used in combination.

The diol is not particularly limited, and examples thereof include: aliphatic diols such as ethylene glycol, propylene glycol, 1,3-propanediol, 1,4-butanediol, diethylene glycol, 1,5-pentanediol, 1,6-hexanediol, dipropylene glycol, triethylene glycol, tetraethylene glycol, 1,2-propanediol, 1,3-butanediol, 2,3-butanediol, neopentylglycol (2,2-dimethylpropane-1,3-diol), 1,2-hexanediol, 2,5-hexanediol, 2-methyl-2,4-pentanediol, 3-methyl-1,3-pentanediol, and 2-ethyl-1,3-hexanediol; and alicyclic diols such as 2,2-bis(4-hydroxycyclohexyl)propane, an alkylene oxide adduct of 2,2-bis(4-hydroxycyclohexyl)propane, 1,4-cyclohexanediol, and 1,4-cyclohexanedimethanol. These may be used alone or two or more thereof may be used in combination.

In particular, the polyester resin (a) is preferably one that contains a component derived from terephthalic acid or isophthalic acid as a dicarboxylic acid component and contains a component derived from ethylene glycol, propylene glycol, or 1,6-hexanediol as a diol component.

A polyester resin having the above composition may be used alone as the polyester resin (a) contained in the wear-resistant layer (A), or a combination of two or more polyester resins having the above composition may be used as the polyester resin (a).

Furthermore, the polyester resin (a) may be a product of copolymerization with a component having a hydrophilic group such as a carboxyl or sulfonic acid group.

In terms of water resistance, durability, and ease of film formation, the glass transition temperature of the polyester resin (a) is preferably 30°C to 80°C, more preferably 35°C to 75°C, even more preferably 40°C to 70°C. The reason why it is preferable for the glass transition temperature of the polyester resin (a) to be within such a range is that in this case a wear-resistant layer (A) having good wear resistance and excellent in adhesion to the front layer (B) can be obtained. The glass transition temperature of the polyester resin (a) can be measured, for example, with a differential scanning calorimeter (DSC).

The (meth)acrylic resin is a polymer formed by reaction of a (meth)acrylic monomer.

The (meth)acrylic monomer is a monomer having a (meth)acrylic group and is preferably free of any active hydrogen group. Examples of the (meth)acrylic monomer include: acrylic acid esters such as methyl acrylate, ethyl acrylate, butyl acrylate, isobutyl acrylate, propyl acrylate, octyl acrylate, dodecyl acrylate, lauryl acrylate, 2-ethylhexyl acrylate, stearyl acrylate, 2-chloroethyl acrylate, phenyl acrylate, and methyl α-chloroacrylate; methacrylic acid esters such as methyl methacrylate, ethyl methacrylate, propyl methacrylate, butyl methacrylate, isobutyl methacrylate, octyl methacrylate, dodecyl methacrylate, lauryl methacrylate, 2-ethylhexyl methacrylate, stearyl methacrylate, phenyl methacrylate, dimethylaminoethyl methacrylate, 2-hydroxylethyl methacrylate, and diethylaminoethyl methacrylate. These may be used alone or two or more thereof may be used in combination. Preferred among these are (meth)acrylic acid alkyl esters having 1 to 24 carbon atoms and free of any active hydrogen group (e.g., methyl (meth)acrylate, ethyl (meth)acrylate, propyl (meth)acrylate, and butyl (meth)acrylate). Particularly preferred is a copolymer of methyl (meth)acrylate and butyl (meth)acrylate.

The (meth)acrylic resin may contain, in addition to the component derived from the (meth)acrylic monomer, a component derived from another monomer having a polymerizable double bond. Examples of such another monomer include an ester group-containing vinyl monomer, a styrene derivative, and a vinyl ether monomer.

The glass transition temperature of the (meth)acrylic resin is preferably 0°C to 100°C, more preferably 10°C to 90°C, even more preferably 20°C to 80°C. The reason why it is preferable for the glass transition temperature of the (meth)acrylic resin to be within such a range is that in this case a wear-resistant layer (A) having good wear resistance and excellent in adhesion to the front layer (B) can be obtained. The glass transition temperature of the (meth)acrylic resin can be measured, for example, with a differential scanning calorimeter (DSC).

The weight ratio between the polyester resin (a) and the (meth)acrylic resin in the wear-resistant layer (A) is preferably, but not limited to, 10:90 to 90:10. If the content of the polyester resin (a) falls below this range, there may be a decrease in the adhesion of the wear-resistant layer (A) to the front layer (B) or the stretchability of the wear-resistant layer (A), or there may be an increase in haze leading to reduced transparency or a deterioration in gloss. If the content of the polyester resin (a) exceeds the above range, there may be a reduction in the wear resistance or water resistance of the wear-resistant layer (A). The weight ratio between the polyester resin (a) and the (meth)acrylic resin is more preferably 20:80 to 60:40.

The wear-resistant layer (A) contains a hydrocarbon wax.

Examples of the hydrocarbon wax include: petroleum waxes such as paraffin wax, microcrystalline wax, and petrolatum; polyolefin waxes such as polyethylene wax and polypropylene wax; synthetic waxes such as Fischer-Tropsch wax and ester wax; animal or vegetable waxes such as carnauba wax, rice-derived wax, bees wax, candelilla wax, rice wax, jojoba oil, and lanolin; and animal or vegetable fats and oils.

Among these, paraffin wax, polyethylene wax, and polypropylene wax are preferred in terms of wear resistance, water resistance, and transparency.

The above hydrocarbon waxes may be used alone or two or more thereof may be used in combination.

The melting point of the hydrocarbon wax is preferably 90°C to 160°C, more preferably 100°C to 150°C, even more preferably 110°C to 140°C. If the melting point of the hydrocarbon wax is lower than 90°C, the water resistance tends to decrease. If the melting point is higher than 160°C, the surface of the wear-resistant layer (A) tends to be less slippery.

In the wear-resistant layer (A), the content of the hydrocarbon wax is 1 part by weight or more and 60 parts by weight or less per 100 parts by weight of the total of the polyester resin (a) and the (meth)acrylic resin. The content of the hydrocarbon wax in this range advantageously allows the stickiness of the surface of the wear-resistant layer (A) to be effectively reduced. A preferred lower limit of the content of the hydrocarbon wax is 10 parts by weight, and a preferred upper limit is 50 parts by weight.

The wear-resistant layer (A) contains an antistatic agent.

Examples of the antistatic agent include anionic surfactants, cationic surfactants, non-ionic surfactants, and amphoteric surfactants. These may be used alone or two or more thereof may be used in combination. Among these, anionic surfactants are preferred.

Examples of the anionic surfactants include: salts of alkyl sulfuric acid esters such as sodium lauryl sulfate and ammonium lauryl sulfate; salts of alkylaryl sulfonic acids such as sodium dodecylbenzenesulfonate, ammonium dodecylbenzenesulfonate, and sodium dodecylnaphthalenesulfonate; polyoxyethylene alkyl sulfonates; polyoxyethylene alkylaryl sulfonates; dialkyl sulfosuccinates; aryl sulfonate formaldehyde condensates; and fatty acid salts such as ammonium laurate, sodium stearate, potassium oleate, and castor oil potash soap.

Among these, a polyoxyethylene alkyl sulfonate is preferred due to its high ability as an antistatic agent.

Examples of the cationic surfactants include: alkylamine salts such as dodecylammonium chloride, coconut amine acetate, and stearylamine acetate; and quaternary ammonium salts such as lauryltrimethylammonium chloride, stearyltrimethylammonium chloride, and cetyltrimethylammonium chloride.

Examples of the non-ionic surfactants include polyoxyethylene alkyl ethers, polyoxyethylene alkylaryl ethers, a condensate of polyethylene glycol and polypropylene glycol, sorbitan fatty acid esters, polyoxyethylene sorbitan fatty acid esters, fatty acid monoglycerides, polyamides, and a condensation product of ethylene oxide and aliphatic amine.

Examples of the amphoteric surfactants include alkyl betaine- or alkylamine oxide-based emulsifiers such as lauryl betaine, stearyl betaine, and lauryldimethylamine oxide.

In the wear-resistant layer (A), the content of the antistatic agent is 0.1 parts by weight or more and 10.0 parts by weight or less per 100 parts by weight of the total of the polyester resin (a) and the (meth)acrylic resin. If the content of the antistatic agent is less than 0.1 parts by weight, the surface resistivity of the wear-resistant layer (A) will be large. If the content of the antistatic agent exceeds 10.0 parts by weight, the surface of the wear-resistant layer (A) will be sticky. A preferred lower limit of the content of the antistatic agent is 1.0 part by weight, and a preferred upper limit is 5.0 parts by weight.

It suffices for the wear-resistant layer (A) to contain the polyester resin (a), the (meth)acrylic resin, the hydrocarbon wax, and the antistatic agent in the proportions described above, and the method for forming the wear-resistant layer (A) is not particularly limited. It is preferable to form the wear-resistant layer (A) by applying an aqueous coating composition onto the front layer (B). The method for the application is not particularly limited, and examples thereof include commonly-known methods such as doctor blade coating, bar coating, gravure coating, roll coating, and spray coating.

It is preferable for the aqueous coating composition to contain: an aqueous composite resin dispersion in which a composite resin containing the polyester resin (a) and the (meth)acrylic resin is dispersed in an aqueous medium; the hydrocarbon wax; and the antistatic agent.

The composite resin contains the (meth)acrylic resin for which the polyester resin (a) acts as a protective colloid. The aqueous composite resin dispersion is a colloidal solution in which the composite resin is dispersed in an aqueous medium. Thus, with the use of the aqueous coating composition, the polyester resin (a) and the (meth)acrylic resin form a sea-island structure in the resulting wear-resistant layer (A) and, in addition, the hydrocarbon wax is dispersed within the sea-island structure, on the surface of which the antistatic agent is present. This improves the wear resistance, the adhesion to the front layer (B), the stretchability, and the transparency, for example.

The average particle size of the composite resin in the aqueous composite resin dispersion is not particularly limited. A preferred lower limit of the average particle size is 10 nm, and a preferred upper limit is 800 nm. The reason why it is preferable for the average particle size to be within these limits is that in this case a wear-resistant layer (A) having good transparency and homogeneity can be obtained. A more preferred lower limit of the average particle size is 50 nm, and a more preferred upper limit is 300 nm.

The average particle size of the composite resin in the aqueous composite resin dispersion can be measured by a dynamic light scattering method.

Examples of the aqueous medium include water and mixed solvents of water with water-miscible organic solvents such as methanol and ethanol. Among these, water is preferred in that it has less impact on the environment.

The method for preparing the aqueous composite resin dispersion is not particularly limited. Examples thereof include: a method in which the polyester resin (a) is mixed with the (meth)acrylic resin in the aqueous medium; and a method in which polymerization of the (meth)acrylic resin is performed in the aqueous medium in the presence of the polyester resin (a).

It is preferable that the application of the aqueous coating composition onto the front layer (B) be followed by stretching in one or more axial directions. The stretching increases the interlayer bond strength between the wear-resistant layer (A) and the front layer (B), leading to prevention of delamination during or after heat shrinkage.

Examples of the method for the stretching include a method which uses a tenter stretching machine or a roll stretching machine and which begins with preheating in a preheating zone (90°C to 120°C), followed by transverse stretching by a factor of 4 to 6 in a stretching zone (80°C to 110°C) and then by thermosetting in a fixing zone (60°C to 85°C).

The wear-resistant layer (A) may further contain an anti-blocking agent such as inorganic particles or organic particles.

The thickness of the wear-resistant layer (A) is not particularly limited. A preferred lower limit is 0.01 $\mu$m, and a preferred upper limit is 10 $\mu$m. The reason why it is preferable for the thickness of the wear-resistant layer (A) to be within these limits is that in this case the wear-resistant layer (A) has good wear resistance. A more preferred lower limit of the thickness of the wear-resistant layer (A) is 0.05 $\mu$m, and a more preferred upper limit is 5 $\mu$m. An even more preferred lower limit is 0.1 $\mu$m, and an even more preferred upper limit is 3 $\mu$m.

The front layer (B) contains a polyester resin (b).

Examples of the polyester resin (b) used in the front layer (B) include a polyester resin obtained by polycondensation of a dicarboxylic acid component and a diol component. Particularly preferred is an aromatic polyester resin containing 55 mol% or more of terephthalic acid as the dicarboxylic acid component per 100 mol% of the (total) dicarboxylic acid component(s). Examples of the dicarboxylic acid component other than the terephthalic acid which may be contained include o-phthalic acid, isophthalic acid, succinic acid, adipic acid, sebacic acid, azelaic acid, octylsuccinic acid, cyclohexanedicarboxylic acid, naphthalenedicarboxylic acid, fumaric acid, maleic acid, itaconic acid, decamethylenecarboxylic acid, and anhydrides and lower alkyl esters of these acids.

The diol component is not particularly limited, examples thereof include: aliphatic diols such as ethylene glycol, 1,3-propanediol, 1,4-butanediol, diethylene glycol, 1,5-pentanediol, 1,6-hexanediol, dipropylene glycol, triethylene glycol, tetraethylene glycol, 1,2-propanediol, 1,3-butanediol, 2,3-butanediol, neopentylglycol (2,2-dimethylpropane-1,3-diol), 1,2-hexanediol, 2,5-hexanediol, 2-methyl-2,4-pentanediol, 3-methyl-1,3-pentanediol, 2-ethyl-1,3-hexanediol, and polytetramethylene ether glycol; and alicyclic diols such as 2,2-bis(4-hydroxycyclohexyl)propane, an alkylene oxide adduct of 2,2-bis(4-hydroxycyclohexyl)propane, 1,4-cyclohexanediol, and 1,4-cyclohexanedimethanol.

In particular, the polyester resin (b) is preferably one that contains a component derived from terephthalic acid as the dicarboxylic acid component and a component derived from ethylene glycol and/or 1,4-cyclohexanedimethanol as the diol component. The use of such a polyester resin (b) can impart good shrinkage properties to the heat-shrinkable multilayer film. When a higher improvement in shrinkage properties is desired, it is preferable to use the polyester resin (b) in which the content of a component derived from ethylene glycol is 60 to 80 mol% and the content of a component derived from 1,4-cyclohexanedimethanol is 10 to 40 mol%, per 100 mol% of the total diol components.

Furthermore, the polyester resin (b) may contain 0 to 30 mol%, preferably 1 to 25 mol%, more preferably 2 to 20 mol%, of a component derived from diethylene glycol. The use of diethylene glycol increases the tensile elongation at break of the heat-shrinkable multilayer film in the main direction of shrinkage, thus making it possible to prevent a situation where tearing off along a perforation causes delamination such that only the front and back layers on the inner side of the film remain on the container.

It is also possible to use a polyester resin containing a component derived from terephthalic acid as the dicarboxylic acid component and further containing a component derived from 1,4-butanediol as the diol component. Such a polyester resin is generally called a polybutylene terephthalate resin.

The polybutylene terephthalate resin can also be used in combination with the polyester resin (b) containing a component derived from terephthalic acid as the dicarboxylic acid component and containing components derived from ethylene glycol and 1,4-cyclohexanedimethanol as the diol components. The use of such a resin mixture can provide better finishing properties.

The polybutylene terephthalate resin may be a polybutylene terephthalate resin consisting only of a component derived from terephthalic acid and a component derived from 1,4-butanediol or may be a polybutylene terephthalate resin containing a dicarboxylic acid component other than a component derived from terephthalic acid and/or a diol component other than a component derived from 1,4-butanediol.

It is preferable that the content of the dicarboxylic acid component other than the component derived from terephthalic acid be 10 mol% or less per 100 mol% of the total dicarboxylic acid components. If the content exceeds 10 mol%, the heat resistance of the polybutylene terephthalate resin may decrease, which is economically disadvantageous. It is preferable that the content of the diol component other than the component derived from 1,4-butanediol be 10 mol% or less per 100 mol% of the total diol components. If the content exceeds 10 mol%, the heat resistance of the polybutylene terephthalate resin may decrease, which is economically disadvantageous.

The amount of the polybutylene terephthalate resin to be added is desirably, but not limited to, 30% by weight or less. If the amount exceeds 30% by weight, the spontaneous shrinkage may increase or the stiffness of the film may decrease.

A preferred lower limit of the glass transition temperature of the polyester resin (b) constituting the front layer (B) is 55°C, and a preferred upper limit is 95°C. If the glass transition temperature is lower than 55°C, the heat-shrinkable multilayer film may suffer an increase in the spontaneous shrinkage. If the glass transition temperature exceeds 95°C, the heat-shrinkable multilayer film may suffer a deterioration in shrinkage properties at low temperatures and in shrinkage finishing properties. A more preferred lower limit of the glass transition temperature is 60°C, and a more preferred upper limit is 90°C.

The glass transition temperature can be measured, for example, with a differential scanning calorimeter (DSC).

Commercially available examples of the polyester resin (b) constituting the front layer (B) include: "Easter" and "Embrace Lv" manufactured by Eastman Chemical Company; "BELLPET" manufactured by Bell Polyester Products, Inc.; and "NOVADURAN" manufactured by Mitsubishi Engineering-Plastics Corporation.

The front layer (B) may optionally contain an additive such as an antioxidant, a heat stabilizer, an ultraviolet absorber, a light stabilizer, a lubricant, an antistatic agent, an anti-blocking agent, a flame retardant, an antimicrobial agent, a fluorescent brightener, or a colorant.

The back layer (D) contains a polyester resin (d). A polyester resin identical to the polyester resin (b) constituting the front layer (B) can be used as the polyester resin (d) constituting the back layer. It is also possible to use a polyester resin (b) containing a dicarboxylic acid component or diol component different from that of the polyester resin (b) constituting the front layer (B).

The proportion of the thickness of each of the front layer (B) and the back layer (D) is not particularly limited. A preferred lower limit of the proportion to the overall thickness of the heat-shrinkable multilayer film is 3%, and a preferred upper limit is 25%. The reason why it is preferable for the proportion of the thickness to be within these limits is that in this case the heat-shrinkable multilayer film exhibits good heat resistance.

The intermediate layer (C) contains a polystyrene resin.

The polystyrene resin is not particularly limited, as long as it has heat shrinkage properties. Preferred is an aromatic vinyl hydrocarbon-conjugated diene copolymer, a resin mixture of an aromatic vinyl hydrocarbon-conjugated diene copolymer and an aromatic vinyl hydrocarbon-aliphatic unsaturated carboxylic acid ester copolymer, or a resin mixture of an aromatic hydrocarbon-conjugated diene copolymer and a styrene homopolymer. When containing any of these resins, the intermediate layer (C) can have good heat shrinkage properties and good shrinkage finishing properties.

Examples of the aromatic vinyl hydrocarbon in the aromatic vinyl hydrocarbon-conjugated diene copolymer include styrene, o-methylstyrene, and p-methylstyrene, and examples of the conjugated diene include 1,3-butadiene, 2-methyl-1,3-butadiene, 2,3-dimethyl-1,3-butadiene, 1,3-pentadiene, and 1,3-hexadiene. These may be used alone or two or more thereof may be used in combination.

Specific preferred examples of the aromatic vinyl hydrocarbon-conjugated diene copolymer include styrene-butadiene-styrene copolymer (SBS resin), styrene-isoprene-styrene copolymer (SIS resin), and styrene-isoprene-butadiene-styrene copolymer (SIBS resin). These may be used alone or two or more thereof may be used in combination.

Examples of the aromatic vinyl hydrocarbon in the aromatic vinyl hydrocarbon-aliphatic unsaturated carboxylic acid ester copolymer include styrene, o-methylstyrene, and p-methylstyrene, and examples of the unsaturated carboxylic acid ester include methyl acrylate, ethyl acrylate, propyl acrylate, butyl acrylate, methyl methacrylate, ethyl methacrylate, propyl methacrylate, and butyl methacrylate. These may be used alone or two or more thereof may be used in combination.

A specific preferred example of the aromatic vinyl hydrocarbon-aliphatic unsaturated carboxylic acid ester copolymer is styrene-butyl acrylate copolymer.

For the resin mixture of an aromatic vinyl hydrocarbon-conjugated diene copolymer and an aromatic vinyl hydrocarbon-aliphatic unsaturated carboxylic acid ester copolymer, the weight ratio between the aromatic vinyl hydrocarbon-conjugated diene copolymer and the aromatic vinyl hydrocarbon-aliphatic unsaturated carboxylic acid ester copolymer is preferably, but not limited to, 20:80 to 99:1. With the ratio falling within this range, the spontaneous shrinkage of the intermediate layer (C) can be effectively reduced and, at the same time, sufficient heat shrinkage properties can be imparted to the intermediate layer (C).

For the resin mixture of an aromatic hydrocarbon-conjugated diene copolymer and a styrene homopolymer, the weight ratio between the aromatic hydrocarbon-conjugated diene copolymer and the styrene homopolymer is preferably, but not limited to, 10:90 to 90:10. With the ratio falling within this range, the spontaneous shrinkage of the intermediate layer (C) can be effectively reduced and, at the same time, sufficient heat shrinkage properties can be imparted to the intermediate layer (C).

The resin mixture of an aromatic hydrocarbon-conjugated diene copolymer and a styrene homopolymer may further contain a plasticizer. Examples of the plasticizer include: ester compounds such as an aromatic carboxylic acid ester, an aliphatic carboxylic acid ester, a glycol ester, a phosphoric acid ester, a trimellitic acid ester, and a citric acid ester; and epoxidized vegetable oils such as epoxidized soybean oil, epoxidized linseed oil, epoxidized rapeseed oil, epoxidized sunflower oil, epoxidized castor oil, epoxidized peanut oil, and epoxidized palm oil. The content of the plasticizer is preferably 5 to 35% by weight.

The intermediate layer (C) may optionally contain an additive such as an antioxidant, a heat stabilizer, an ultraviolet absorber, a light stabilizer, a lubricant, an antistatic agent, a flame retardant, an antimicrobial agent, a fluorescent brightener, or a colorant.

The proportion of the thickness of the intermediate layer (C) is not particularly limited. A preferred lower limit of the proportion to the overall thickness of the heat-shrinkable multilayer film is 50%, and a preferred upper limit is 90%. The reason why it is preferable for the proportion of the thickness of the intermediate layer (C) to be within these limits is that in this case, when a perforation is formed in the heat-shrinkable multilayer film, the resulting film is superior in cuttability along the perforation.

It is preferable for the heat-shrinkable multilayer film of the present invention to have an adhesive layer (E) between the front layer (B) and the intermediate layer (C) and/or between the intermediate layer (C) and the back layer (D).

Examples of an adhesive resin contained in the adhesive layer (E) include a commercially available adhesive resin and a resin mixture of a polyester resin and a polystyrene resin. Preferred commercially available adhesive resins are a styrene elastomer, a modified styrene elastomer, and a polyester elastomer.

The styrene elastomer refers to, for example, an elastomer composed of polystyrene as a hard segment and polybutadiene, polyisoprene, or polybutadiene-polyisoprene copolymer as a soft segment or a hydrogenated product of such an elastomer. The hydrogenated product may be one in which polybutadiene or polyisoprene is partially hydrogenated or may be one in which polybutadiene or polyisoprene is wholly hydrogenated.

Commercially available examples of the styrene elastomer include: "Tuftec" and "Tufprene" which are manufactured by Asahi Kasei Chemicals Corporation; "Kraton" manufactured by Kraton Polymers Japan Ltd.; DYNARON, JSR TR, and JSR SIS which are manufactured by JSR corporation; and "SEPTON" manufactured by KURARAY CO., LTD.

Examples of the modified styrene elastomer include those produced by modification of the above styrene elastomers with a functional group such as carboxylic acid group, acid anhydride group, amino group, epoxy group, or hydroxy group.

The polyester elastomer is preferably a saturated polyester elastomer and particularly preferably a saturated polyester elastomer having a polyalkylene ether glycol segment.

A preferred example of the saturated polyester elastomer having a polyalkylene ether glycol segment is a block copolymer composed of a polyalkylene ether glycol as a hard segment and an aliphatic polyester. More preferred is a polyester-polyether block copolymer containing a polyalkylene ether glycol as a soft segment.

Commercially available examples of the polyester elastomer include PRIMALLOY manufactured by Mitsubishi Chemical Corporation, PELPRENE manufactured by TOYOBO CO., LTD., and Hytrel manufactured by DU PONT-TORAY CO., LTD.

For the resin mixture of a polyester resin and a polystyrene resin, the polyester resin used may be identical to the polyester resin (b) used in the front layer (B) or the polyester resin (d) used in the back layer (D) described above or may be a different polyester resin.

The polyester resin contained in the adhesive layer (E) is particularly preferably one that contains a component derived from terephthalic acid as a dicarboxylic acid component and a component derived from ethylene glycol and/or 1,4-cyclohexanedimethanol as a diol component. Such a polyester resin may further contain 0 to 30 mol% of a component derived from diethylene glycol.

A preferred lower limit of the glass transition temperature of the polyester resin contained in the adhesive layer (E) is 50°C, and a preferred upper limit is 95°C. The reason why it is preferable for the glass transition temperature to be within these limits is that in this case delamination can be effectively prevented when the heat-shrinkable multilayer film is heat-shrunk. A more preferred lower limit of the glass transition temperature is 55°C, an even more preferred lower limit is 60°C, and a more preferred upper limit is 90°C.

For the resin mixture of a polyester resin and a polystyrene resin, the polystyrene resin used may be identical to the polystyrene resin used in the intermediate layer (C) described above or may be a different polystyrene resin.

When the polystyrene resin contained in the adhesive layer (E) is a styrene-conjugated diene copolymer, it is preferable that the styrene content be 55 to 90% by weight and the conjugated diene content be 10 to 45% by weight per 100% by weight of the styrene-conjugated diene copolymer. If the styrene content and conjugated diene content fall outside these ranges, the cuttability along a perforation achieved when the perforation is formed in the heat-shrinkable multilayer film may be reduced, or the interlayer bond strength may be reduced.

A preferred lower limit of the Vicat softening temperature of the polystyrene resin contained in the adhesive layer (E) is 60°C, and a preferred upper limit is 85°C. If the Vicat softening temperature falls outside these limits, the interlayer bond strength in the heat-shrinkable multilayer film may be reduced. A more preferred lower limit of the Vicat softening temperature is 65°C, and a more preferred upper limit is 80°C.

For the resin mixture of a polyester resin and a polystyrene resin, the weight ratio between the polyester resin and the polystyrene resin is preferably, but not limited to, 60:40 to 85:15. If the weight ratio between the polyester resin and the polystyrene resin falls outside this range, the cuttability along a perforation achieved when the perforation is formed in the heat-shrinkable multilayer film may be reduced, or the interlayer bond strength may be reduced. It is more preferable for the weight ratio between the polyester resin and the polystyrene resin to be 65:35 to 80:20.

The thickness of the adhesive layer (E) is not particularly limited. A preferred lower limit is 0.5 $\mu$m, and a preferred upper limit is 3.0 $\mu$m. The reason why it is preferable for the thickness to be within these limits is that in this case delamination of the heat-shrinkable multilayer film can be effectively prevented. A more preferred lower limit of the thickness is 0.7 $\mu$m, and a more preferred upper limit is 2.0 $\mu$m.

An antioxidant, heat stabilizer, lubricant, or antistatic agent may optionally be added to the adhesive layer (E).

The thickness of the heat-shrinkable multilayer film of the present invention is not particularly limited. A preferred lower limit is 10 $\mu$m, and a preferred upper limit is 70 $\mu$m. The reason why it is preferable for the thickness of the heat-shrinkable multilayer film to be within these limits is that in this case high ease of handling is obtained during printing process or during attachment of the heat-shrinkable label. A more preferred lower limit of the thickness is 30 $\mu$m, and a more preferred upper limit is 60 $\mu$m.

The haze of the heat-shrinkable multilayer film of the present invention is not particularly limited. A preferred upper limit is 10%. The haze can be measured according to JIS-K-6782.

Examples of the method for manufacturing the heat-shrinkable multilayer film of the present invention include a method comprising the steps of: co-extruding the front layer (B), the intermediate layer (C), the back layer (D), and, optionally, the adhesive layer (E); and applying the aqueous coating composition as described above onto the front layer (B) to form the wear-resistant layer (A).

The present invention is also directed to a method for manufacturing the heat-shrinkable multilayer film of the present invention, the method comprising the steps of: co-extruding a front layer (B), an intermediate layer (C), a back layer (D), and, optionally, an adhesive layer (E); and applying an aqueous coating composition onto the front layer (B) to form a wear-resistant layer (A), the aqueous coating composition containing: an aqueous composite resin dispersion in which a composite resin containing a polyester resin (a) and a (meth)acrylic resin is dispersed in an aqueous medium; a hydrocarbon wax; and an antistatic agent.

Examples of the method for the co-extrusion include a method in which a resin constituting the front layer (B), a resin constituting the intermediate layer (C), a resin constituting the back layer (D), and, optionally, a resin constituting the adhesive layer (E) are respectively put in extruders with a barrel temperature of 160°C to 280°C and extruded through a multi-manifold die with a temperature of 185°C to 280°C into a sheet, which is cooled and hardened on a take-up roll.

After such co-extrusion, the extrudate may be longitudinally stretched with a roll stretching machine adjusted to 70°C to 90°C by a factor of 1 to 1.5 based on the rotational speed ratio between a low-speed roll and a high-speed roll, and the longitudinally-stretched extrudate may further be transversely stretched with a tenter stretching machine adjusted to 70°C to 120°C by a factor of 3.0 to 6.5.

The step of applying the aqueous coating composition onto the front layer (B) to form the wear-resistant layer (A) may be performed after the longitudinal stretching or after the transverse stretching. The step of applying the aqueous coating composition onto the front layer (B) to form the wear-resistant layer (A) may be separately performed after the transversely-stretched extrudate is wound up.

The heat-shrinkable multilayer film of the present invention is not limited to particular applications. Due to having excellent wear resistance, high transparency, and good gloss, the heat-shrinkable multilayer film can be used in a heat-shrinkable label for use in PET bottled drinks etc. The present invention is also directed to a heat-shrinkable label formed using the heat-shrinkable multilayer film of the present invention.

- Advantageous Effects of Invention

According to the present invention, it is possible to provide a heat-shrinkable multilayer film that has excellent wear resistance, high transparency, and good gloss and that suffers less from surface stickiness. According to the present invention, it is also possible to provide a method for manufacturing the heat-shrinkable multilayer film and a heat-shrinkable label formed using the heat-shrinkable multilayer film.

DESCRIPTION OF EMBODIMENTS

The present invention will now be described in more detail with reference to examples. It should be noted that the present invention is not limited only to these examples.

(Example 1)

(1) Preparation of aqueous coating composition

There was prepared an aqueous composite resin dispersion in which a composite resin containing a polyester resin (a) (terephthalic acid-ethylene glycol polycondensate having a glass transition temperature of 60°C) and a (meth)acrylic resin (methyl methacrylate-butyl acrylate copolymer having a glass transition temperature of 50°C) was dispersed. The average particle size of the composite resin was 120 nm, and the concentration of the composite resin was 30.8% by weight in terms of solid content. The average particle size of the composite resin was measured by a dynamic light scattering method.

To this aqueous composite resin dispersion was added a polyethylene wax (Hitec E-6400 manufactured by TOHO Chemical Industry Co., Ltd. and having a melting point of 120°C) in an amount of 35 parts by weight per 100 parts by weight of the total of the polyester resin (a) and the (meth)acrylic resin, and then an antistatic agent (anionic surfactant, polyoxyethylene alkyl sulfonate) was further added in an amount of 2.0 parts by weight per 100 parts by weight of the total of the polyester resin (a) and the (meth)acrylic resin, followed by stirring to prepare an aqueous coating composition.

(2) Formation of film base

As the resin constituting the front layer (B) there was used a polyester resin (b) containing 100 mol% of terephthalic acid as a dicarboxylic acid component and containing 67 mol% of a component derived from ethylene glycol and 33 mol% of a component derived from 1,4-cyclohexanedimethanol as diol components.

As the resin constituting the back layer (D) there was used a resin (polyester resin (d)) identical to the polyester resin (b) constituting the front layer (B).

As the resin constituting the intermediate layer (C) there was used a styrene-butadiene block copolymer containing 78% by weight of styrene and 22% by weight of butadiene and having a Vicat softening temperature of 72°C and a MFR of 5.6 g/10 min.

As the resin constituting the adhesive layer (E) there was used a resin mixture of a polyester resin identical to the resin constituting the front layer (B) and the back layer (D) and a styrene-butadiene block copolymer identical to the resin constituting the intermediate layer (C).

These resins were respectively put in extruders with a barrel temperature of 160°C to 250°C and extruded through a 250°C multilayer die into a sheet, which was cooled and hardened on a 40°C take-up roll. The extrudate was then passed between an 80°C low-speed roll and an 85°C high-speed roll in a longitudinal stretching machine and thus longitudinally stretched by a factor of 1.3 to obtain a film base.

(3) Fabrication of heat-shrinkable multilayer film

The aqueous coating composition prepared as above was applied to the obtained film base by a bar coater method, followed by drying in a 60°C drying oven.

Next, the film base to which was applied the aqueous coating composition was stretched in the TD by a factor of 5.0 in a tenter stretching machine with the preheating zone set at 110°C, the stretching zone set at 90°C, and the fixing zone set at 80°C. The stretched film base was then wound up on a winder to obtain a heat-shrinkable multilayer film. The heat-shrinkable multilayer film obtained had a thickness of about 45 μm and had a six-layer structure composed of the wear-resistant layer (A) (0.3 μm), the front layer (B) (6 μm), the adhesive layer (E) (1 μm), the intermediate layer (C) (31 μm), the adhesive layer (E) (1 μm), and the back layer (D) (6 μm) arranged in this order.

It should be added that the formation of the film base in (2) and the fabrication of the heat-shrinkable multilayer film in (3) were performed as successive steps.

(Examples 2 to 12 and Comparative Examples 1 to 7)

Heat-shrinkable multilayer films were obtained in the same manner as in Example 1, except for the changes shown in Table 1 as to the types and contents of the polyester resin (a), (meth)acrylic resin, hydrocarbon wax, and antistatic agent, the resin constituting the front layers (B) and (D), and whether or not to place the adhesive layer.

In the table, "polypropylene wax" refers to AQUACER-593 manufactured by BYK Japan KK (melting point: 160°C), and "paraffin wax" refers to AQUACER-539 manufactured by BYK Japan KK (melting point: 90°C).

As the polybutylene terephthalate resin there was used a polybutylene terephthalate resin having an intrinsic viscosity (IV value) of 1.0 and consisting only of a component derived from terephthalic acid and a component derived from 1,4-butanediol.

<Evaluations>

The heat-shrinkable multilayer films obtained in Examples and Comparative Examples were subjected to the following evaluations. The results are shown in Table 1.

(1) Transparency (haze)

The transparency of each heat-shrinkable multilayer film was evaluated using NDH 5000 (manufactured by NIPPON DENSHOKU INDUSTRIES CO., LTD.) according to JIS-K-6782. A film that showed a haze value of 10% or less can be rated as having high transparency.

(2) Gloss (gloss level)

The gloss level of each heat-shrinkable multilayer film was evaluated using VG 2000 (manufactured by NIPPON DENSHOKU INDUSTRIES CO., LTD.) at an incident angle of 45° according to JIS-Z-8741. A film that showed a gloss level of 135% or more can be rated as having good gloss.

(3) Surface resistivity

Each of the heat-shrinkable multilayer films obtained was cut into a sample with a size of 1 m$^2$, and the surface resistivity was measured at arbitrarily-selected points on the surface of the wear-resistant layer (A) of the sample using Hiresta UP (manufactured by Mitsubishi Chemical Corporation). The measurement was performed at five different points on the sample, and the average was employed as a surface resistivity. The applied voltage was 500 V and the time of voltage application was 10 s.

(4) Adhesion

An evaluation was made as follows according to JIS-K5600-5-6 (1999).

Cuts arranged at intervals of 1 mm and in a grid pattern were made on each heat-shrinkable multilayer film in such a manner that the cuts extended through the wear-resistant layer (A) to the front layer (B). The number of cuts was 6 in each of the row and column directions of the grid pattern. A 25-mm-wide transparent adhesive tape was attached onto the 25-cell grid by pressing the tape with a force of 3.1 N/10 mm. Within 5 minutes after the attachment of the transparent adhesive tape, an edge of the transparent adhesive tape was held at an angle of 60 degrees and the transparent adhesive tape was peeled off over 0.5 to 1.0 seconds. Whether delamination occurred between the wear-resistant layer (A) and the front layer (B) in the grid was observed with a microscope. The same measurement was performed on three different spots. A film for which no delamination was observed at all of the three spots was considered practically usable, and given a rating of "○ (Good)". A film for which delamination was observed at any of the three spots was given a rating of "x (Poor)".

(5) Post-shrinkage adhesion

Each heat-shrinkable multilayer film was cut into a size of 100 mm (MD direction) × 150 mm (TD direction) and immersed in 70°C hot water for 10 seconds, after which the heat-shrinkable multilayer film was taken out and then immediately immersed in tap water for 10 seconds. The resulting film was evaluated by the same testing method as in "(4) Adhesion".

(6) Heat shrinkage properties

Each heat-shrinkable multilayer film was cut into a size of 100 mm (MD direction) × 100 mm (TD direction) and immersed in 70°C hot water for 10 seconds, after which the heat-shrinkable multilayer film was taken out and then immediately immersed in tap water for 10 seconds. The length L of one side in the transverse direction of the heat-shrinkable multilayer film was measured, and the heat shrinkage percentage in the transverse direction was determined according to the following equation.

$$\texttt{Heat shrinkage percentage (\%) = \{(100 - L)/100\} × 100}$$

The number of measurements was three (n = 3), and the average was employed as the value of the heat shrinkage percentage.

(7) Stretchability

The surface of the wear-resistant layer (A) as a coating of each heat-shrinkable multilayer film was observed with a SEM (S-4800, manufactured by Hitachi High-Technologies Corporation) at a magnification of 2000 times. A film for which no crack was found in the coating surface was given a rating of "○ (Good)", while a film for which any crack was found in the coating surface was given a rating of "× (Poor)".

(8) Coating properties

The coating properties of the aqueous coating compositions used in production of the heat-shrinkable multilayer films of Examples and Comparative Examples were evaluated. Specifically, whether cissing occurred on the film was visually evaluated immediately after application of the aqueous coating composition. Whether an aqueous coating composition is uniformly leveled can be checked from the occurrence or non-occurrence of cissing. The occurrence or non-occurrence of cissing can easily be checked on the basis of whether the aqueous coating composition aggregates into a bead on the film.
A rating of "○ (Good)" was given when no cissing of the aqueous coating composition occurred, while a rating of "× (Poor)" was given when cissing occurred.

(9) Vibration test

Each of the heat-shrinkable multilayer films obtained was used to fabricate a label with a flat width of 114 mm and a length of 160 mm. This label was placed over a 500 ml round PET bottle and attached to the PET bottle using a steam tunnel, "SH-5000", manufactured by Fuji Astec, Inc. Thereafter, 24 PET bottles thus labeled were packaged in a cardboard box, and a vibration test was conducted according to JIS-Z-0232; 1994 under the conditions specified below. After the vibration test, the labeled PET bottles were taken out of the cardboard box, and the number of bottles in which a hole was formed was counted.

(Conditions)

Apparatus: Electrodynamic vibration testing apparatus (VS-2000A-140, manufactured by IMV CORPORATION)
Frequency: 5 to 50 HZ, Acceleration: 0.75 G, Time: 20-minute vibration in each of X, Y, and Z directions

(10) Measurement of mean deviation of friction coefficient

Each heat-shrinkable multilayer film was cut into a size of 100 mm (MD direction) × 100 mm (TD direction) and immersed in 70°C hot water for 10 seconds, after which the heat-shrinkable multilayer film was taken out and then immediately immersed in tap water for 10 seconds. The surface of the wear-resistant layer (A) of the heat-shrinkable multilayer film was then subjected to measurement of mean deviation of friction coefficient (MMD) by a KES method using KES FB 4-AUTO-A (manufactured by KATO TEC CO., LTD.). The MMD is a value representing the roughness of a surface, and the surface is sensed to be very sticky when the MMD is more than 7.

[Table 1]

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|---|---|---|---|---|---|
| Wear-resistant layer (A) (parts by weight) | | Polyester resin (a) | 40 | 40 | 20 | 40 | 40 | 40 | 40 | 40 | 40 | 40 | 40 | 40 | 40 | 40 | 40 | 40 | 40 | 40 | 0 |
| | | (Meth)acrylic resin | 60 | 60 | 80 | 60 | 60 | 60 | 60 | 60 | 60 | 60 | 60 | 60 | 60 | 60 | 60 | 60 | 60 | 60 | 100 |
| | Hydrocarbon wax | Polyethylene wax | 35 | 45 | 45 | 60 | 15 | - | - | - | - | 60 | 60 | 60 | 0 | 0,5 | 65 | 35 | 45 | 60 | 45 |
| | | Polypropylene wax | - | - | - | - | - | 35 | 45 | - | - | - | - | - | - | - | - | - | - | - | - |
| | | Paraffin wax | - | - | - | - | - | - | - | 35 | 45 | - | - | - | - | - | - | - | - | - | - |
| | Antistatic agent | Polyoxyethylene alkyl sulfonate | 2 | 3 | 3 | 5 | 0,1 | 3 | 4 | 2 | 3 | 10 | 10 | 10 | 1 | 1 | 5 | 0,05 | 0 | 12 | 7 |
| Front layer (B), Back layer (D) (parts by weight) | | Polyester resin (b) | 100 | 100 | 100 | 100 | 100 | 100 | 100 | 100 | 100 | 70 | 100 | 100 | 100 | 100 | 100 | 100 | 100 | 100 | 100 |
| | | Polybutylene terephthalate resin | 0 | 0 | 0 | 0 | 0 | 0 | 0 | 0 | 0 | 30 | 0 | 0 | 0 | 0 | 0 | 0 | 0 | 0 | 0 |
| Adhesive layer (E) | | Resin mixture of front layer (B), back layer (D), and intermediate layer (C) | Placed | Placed | Placed | Placed | Placed | Placed | Placed | Placed | Placed | Placed | Placed | Not placed | Placed | Placed | Placed | Placed | Placed | Placed | Placed |
| Evaluation | | Haze (%) | 3,16 | 4,37 | 5,82 | 9,12 | 7,96 | 5,41 | 7,29 | 4,93 | 6,96 | 8,32 | 9,20 | 8,80 | 3,1 | 4,16 | 10,37 | 2,96 | 4,18 | 9,34 | Unmeasurable |
| | | Gloss level (%) | 170 | 170 | 167 | 165 | 166 | 168 | 167 | 171 | 164 | 163 | 163 | 163 | 169 | 172 | 165 | 178 | 168 | 162 | Unmeasurable |
| | | Surface resistivity (Ω/□) | 1,4E+12 | 5,1E+12 | 8,1E+12 | 6,6E+12 | 2,5E+13 | 3,2E+12 | 2,7E+12 | 7,7E+12 | 4,9E+12 | 1,33E+12 | 1,10E+12 | 1,35E+12 | 1,21E+12 | 1,20E+12 | 4,19E+12 | 6,14E+14 | Unmeasurable | 8,90E+11 | Unmeasurable |
| | | Adhesion | ○ | ○ | ○ | ○ | ○ | ○ | ○ | ○ | ○ | ○ | ○ | ○ | ○ | ○ | ○ | ○ | ○ | ○ | × |
| | | Post-shrinkage adhesion | ○ | ○ | ○ | ○ | ○ | ○ | ○ | ○ | ○ | ○ | ○ | ○ | ○ | ○ | ○ | ○ | ○ | ○ | × |
| | | Heat shrinkage percentage (%) | 17 | 15 | 14 | 17 | 17 | 18 | 15 | 16 | 16 | 15 | 17 | 17 | 17 | 15 | 15 | 16 | 18 | 17 | 18 |
| | | Stretchability | ○ | ○ | ○ | ○ | ○ | ○ | ○ | ○ | ○ | ○ | ○ | ○ | ○ | ○ | ○ | ○ | ○ | ○ | × |
| | | Coating properties | ○ | ○ | ○ | ○ | ○ | ○ | ○ | ○ | ○ | ○ | ○ | ○ | ○ | ○ | ○ | ○ | ○ | ○ | × |
| | | Vibration test (number of bottles with hole) | 0 | 0 | 0 | 0 | 0 | 0 | 0 | 0 | 0 | 0 | 0 | 0 | 6 | 0 | 0 | 0 | 0 | 0 | Unmeasurable |
| | | Mean deviation of friction coefficient | 5,8 | 5,1 | 5 | 4,8 | 6,1 | 5,2 | 5,1 | 5,4 | 5,4 | 5,5 | 5,6 | 5,4 | 7,4 | 7,2 | 4,2 | 5,8 | 5,6 | 7,4 | Unmeasurable |

INDUSTRIAL APPLICABILITY

According to the present invention, it is possible to provide a heat-shrinkable multilayer film that has excellent wear resistance and suffers less from static electricity generation and surface stickiness. According to the present invention, it is also possible to provide a method for manufacturing the heat-shrinkable multilayer film and a heat-shrinkable label formed using the heat-shrinkable multilayer film.

**Claims**

1.   A heat-shrinkable multilayer film comprising, in order: a wear-resistant layer (A) containing a polyester resin (a), a (meth)acrylic resin, a hydrocarbon wax, and an antistatic agent; a front layer (B) containing a polyester resin (b); an intermediate layer (C) containing a polystyrene resin; and a back layer (D) containing a polyester resin (d),
the wear-resistant layer (A) containing the hydrocarbon wax in an amount of 1 to 60 parts by weight and the antistatic agent in an amount of 0.1 to 10.0 parts by weight, per 100 parts by weight of the total of the polyester resin (a) and the (meth)acrylic resin.

2.   The heat-shrinkable multilayer film according to claim 1, wherein in the wear-resistant layer (A), a weight ratio between the polyester resin (a) and the (meth)acrylic resin is 10:90 to 90:10.

3.   The heat-shrinkable multilayer film according to claim 1, comprising an adhesive layer (E) between the front layer (B) and the intermediate layer (C) and/or between the intermediate layer (C) and the back layer (D).

4.   A method for manufacturing the heat-shrinkable multilayer film according to claim 1, 2, or 3, the method comprising the steps of:

co-extruding a front layer (B), an intermediate layer (C), and a back layer (D); and

applying an aqueous coating composition onto the front layer (B) to form a wear-resistant layer (A),
the aqueous coating composition containing: an aqueous composite resin dispersion in which a composite resin containing a polyester resin (a) and a (meth)acrylic resin is dispersed in an aqueous medium; a hydrocarbon wax; and an antistatic agent.

5. A heat-shrinkable label, formed using the heat-shrinkable multilayer film according to claim 1, 2, or 3.

## INTERNATIONAL SEARCH REPORT

| International application No. |
| --- |
| PCT/JP2015/064464 |

A. CLASSIFICATION OF SUBJECT MATTER
*B32B27/30*(2006.01)i, *B32B27/36*(2006.01)i, *B65D65/40*(2006.01)i, *C08L33/00*
(2006.01)i, *C08L67/00*(2006.01)i

According to International Patent Classification (IPC) or to both national classification and IPC

B. FIELDS SEARCHED

Minimum documentation searched (classification system followed by classification symbols)
B32B1/00-43/00, B65D65/40, C08L33/00, C08L67/00

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2013/011826 A1 (Showa Denko Kabushiki Kaisha), 24 January 2013 (24.01.2013), claims; paragraphs [0019] to [0041], [0047], [0064] to [0110] & TW 201313479 A | 1-5 |
| Y | JP 2008-031345 A (Toyobo Co., Ltd.), 14 February 2008 (14.02.2008), claims; paragraphs [0049], [0082] (Family: none) | 1-5 |
| Y | JP 2004-122670 A (Teijin DuPont Films Japan Ltd.), 22 April 2004 (22.04.2004), claims; paragraphs [0057] to [0084] (Family: none) | 1-5 |

| ☒ Further documents are listed in the continuation of Box C. | ☐ See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 10 July 2015 (10.07.15) | 21 July 2015 (21.07.15) |

| Name and mailing address of the ISA/ Japan Patent Office 3-4-3,Kasumigaseki,Chiyoda-ku, Tokyo 100-8915,Japan | Authorized officer |
| | Telephone No. |

Form PCT/ISA/210 (second sheet) (July 2009)

**INTERNATIONAL SEARCH REPORT**

International application No.

PCT/JP2015/064464

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-149521 A  (Toyobo Co., Ltd.), 08 July 2010 (08.07.2010), claims; paragraphs [0055] to [0079] & US 2011/0143123 A1    & WO 2010/016563 A1 & EP 2311903 A1        & KR 10-2011-0041555 A & CN 102112533 A | 1-5 |
| Y | JP 2007-216525 A  (Fukuvi Chemical Industry Co., Ltd.), 30 August 2007 (30.08.2007), paragraph [0003] (Family: none) | 1-5 |
| Y A | JP 2008-062640 A  (Gunze Ltd.), 21 March 2008 (21.03.2008), claims; paragraphs [0005], [0051], [0057] to [0095] & US 2009/0202851 A1    & WO 2008/007710 A1 & EP 2039507 A1          & CA 2656809 A & CN 101489784 A        & KR 10-2009-0057366 A & AU 2007273551 A        & TW 200812798 A | 3,4 1,2,5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008062640 A

- JP 2002132159 A